# EUROPEAN PATENT SPECIFICATION

(11) **EP 1 943 125 B1**
(45) Date of publication and mention of the grant of the patent: **29.06.2011**
(21) Application number: 05790955.8
(22) Date of filing: 14.09.2005
(51) Int. Cl.: B60N 2/28

(54) **IMPROVEMENTS IN OR RELATING TO CHILD SEATS**
VERBESSERUNGEN VON KINDERSITZEN ODER DIESE BETREFFEND
PERFECTIONNEMENTS RELATIFS A DES SIEGES POUR ENFANTS

(30) Priority: 14.09.2004 GB 0420413
(43) Date of publication of application: 16.07.2008
(73) Proprietor: MAGMATIC, LTD., Bristol, BS2 0LP (GB)
(72) Inventor: Barker Derrick, Pershore, Worcestershire WR10-2NU (GB)
(74) Representative: Vigars, Christopher Ian
(86) International application number: PCT/GB2005/050158
(87) International publication number: WO 2006/030243

(56) References cited:
- EP-A- 1 442 924
- WO-A-98/18650
- GB-A- 2 220 848
- GB-A- 2 262 511
- US-A1- 2003 151 282
- US-A1- 2004 074 937

## Description

The present invention relates to improvements in or relating to child .seats. In particular, it relates to child seats for use in vehicles such as cars. More particularly, it relates to such child seats known as "booster seats".

Booster seats are provided for children typically in the age range of 4 to 10 years and are designed for use in conjunction with standard vehicle restraining strap mechanisms. The purpose of the booster seat is to elevate the child to a position in which conventional vehicle seat belt restraining systems can be safely employed to restrain the child. If a conventional vehicle seat belt restraining system is used to restrain a child without the use of the booster seat, in the case of extreme deceleration such as that experienced in an impact or under sudden breaking, a child may slip under the belt arrangement through the child's momentum. A further problem of systems which employ a cross body shoulder strap is that the strap crossing over the body from the shoulder is designed for use with an adult and, as such, the strap sits across the shoulder and chest and towards the hip on the opposite side of the body. If a child uses such an arrangement the cross body shoulder strap will generally sit across the face or neck of the child and would result in serious injury to the child in circumstances of extreme deceleration of the vehicle.

In use, a booster seat is positioned on a vehicle's existing seat and a child sits on the seat. The child and seat are then restrained by passing a conventional seat belt under a first engaging hook on one side of the seat, over the child's lap in a manner of a conventionally used seat belt, and then under a further engaging hook on a second side of the seat before the clip of the seat belt is docked with an anchor point of the vehicle seat belt restraining system.

This arrangement results in both the child and the seat being restrained by the belt system. Such an arrangement is beneficial as it prevents the seat from sliding from under a child under instances of extreme deceleration which might otherwise result in unnecessary injury to the child. The booster seat also raises the height of the child relative to the vehicle's existing seat arrangement and as a result the cross body shoulder strap of the vehicle's seat belt restraining system will safely sit across the shoulder and chest of the child.

Booster seats are well known and typically comprise a basic seat arrangement with means for engaging standard vehicle seat belt restraining systems. Typically, the belt engaging members are rigidly formed and integral with the seat framework. Such an arrangement leads to difficulties in handling, as the seat is generally awkward and quite bulky. Further difficulties are encountered in the storage and transportation of the seat as the rigid belt engaging members makes stacking of the seat difficult. For instance, a family on holiday may wish to hire a car and therefore will require a booster seat for any child between the ages of 4 to 10 years. Conventional booster seats would be cumbersome and inconvenient for transporting to the holiday destination as part of the family's luggage. Therefore, the family must rely on the rental company providing an adequate child seat. Such reliance upon a third party may not be acceptable to many parents who may not be familiar with the kind of seat provided or who may feel that the seat provided is not adequate to their needs. Worse still, the rental company may not be able to provide a suitable seat to meet the requirements of the family which may result in the family having to compromise its holiday plans.

The present invention seeks to address the above-mentioned deficiencies associated with the prior art by providing a child booster seat according to claim 1.

Preferably, at least two seat belt engaging elements are provided, respectively attached to the left and right sides of the seat arrangement and towards the rear end of the seat as defined by the end closest to the back support of the vehicle seat when the booster seat is positioned for use.

Preferably, these seat belt engaging elements are housed within a fabric compartment of the seat arrangement.

Preferably, the seat belt engaging elements are pivotally attached to the seat arrangement and more preferably hingedly attached. Optionally, the seat belt engaging elements are slidably attached within a channel between at least a first position in which the elements are stowed within the body of the seat arrangement, and at least a second position in which the elements are engageable, in use, by the vehicle's seat belt arrangement. Optionally, the seat belt engaging elements are demountable.

Preferably, the seat belt engaging elements are rigidly formed.

Preferably, at least one shoulder strap is provided to facilitate carrying and transport of the booster seat arrangement. Suitably, two straps are provided to enable the seat arrangement to be carried on a person's back in the manner of a rucksack or backpack. Optionally the straps are demountable.

Preferably, the backpack booster seat comprises a rigid internal seat body covered with a fabric cover. More preferably the arrangement of the rigid internal structure and the fabric cover provide at least one compartment for storage. Suitably at least one individual compartment is closeable by a zip fastener arrangement.

Suitably, the cover is removable from the rigid internal seat body. Suitably the covering will fit tightly over the at least one compartment to provide at least one individual compartment.

Preferably, appropriately positioned padding is provided for comfort of the wearer whilst the pack is being used as such. Suitably, at least some of the padding will be removable.

Suitably, the at least one strap is stowable within the seat arrangement when the booster backpack is used as a booster seat.

The above and other aspects of the present invention will now be described in further detail, by way of example only, with reference to the accompanying drawings, in which:
Figure 1 is a perspective view of an embodiment of the present invention;
Figure 2 is a perspective view of the embodiment of Figure 1 with retaining elements in a stowed position;
Figure 3 is a perspective view of a second embodiment illustrating the seat arrangement of the booster backpack;
Figure 4 is a perspective part view of the embodiment of Figure 3 wherein the seat belt engaging elements are illustrated in first and second position;
Figure 5 is a perspective part view of the embodiment of Figure 4 with the fabric cover removed;
Figure 6 is a perspective part sectional view illustrating the rigid internal framework of the booster backpack;
Figure 7 is a perspective view of the embodiment of Figure 3 illustrating an open rear storage compartment;
Figure 8 is a part perspective view of the embodiment of Figure 3 illustrating a front storage compartment.
Figure 9 is a perspective e view of the embodiment of Figure 3 illustrating a closed rear storage compartment.
Figure 10 is a part perspective view through a section of the embodiment of Figure 3;
Figure 11 is a front perspective view of a booster backpack of the embodiment of Figure 3;
Figure 12 is a rear perspective view of a booster backpack of the embodiment of Figure 3.

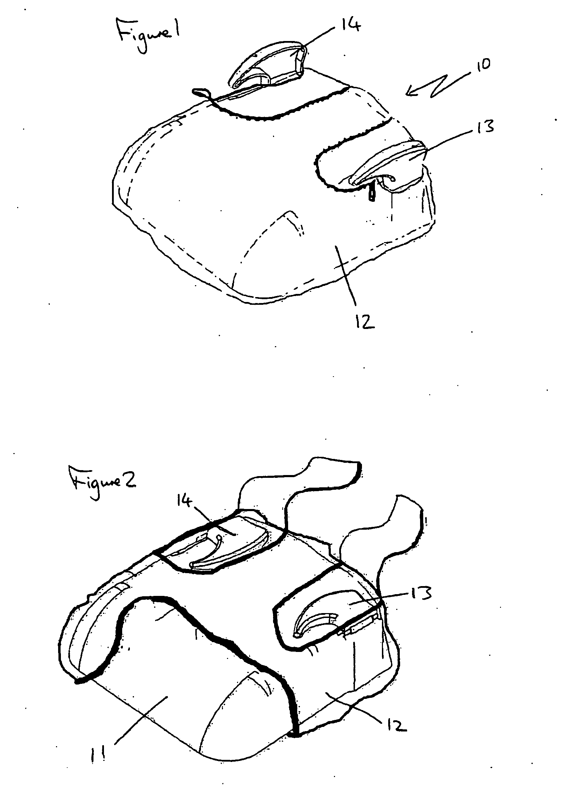

Referring to Figures 1 and 2, there is illustrated an embodiment of a booster seat 10 having a rigid internal structure 11 which is encased with a fabric structure 12. The rigid internal structure 11 is preferably moulded from a plastics material and is retained within the fabric structure 12 such that the two cannot be easily separated. Structure 11 further comprises two seat belt engaging elements in the general form of hooks 13 and 14, positioned at right and left sides of the seat arrangement, and towards the rear of the seat as defined by the end of the seat which will be closest to the backrest of the vehicle seat when the booster seat is positioned for such use. These seat belt engaging elements 13 and 14 are attached such as to allow movement between a stowable position as illustrated in Figure 2, and a seat belt engaging position, as illustrated in Figure 1.

The seat belt engaging elements are preferably hingedly attached, as illustrated in the Figures, but may alternatively be slidable in a channel extending into the rigid internal structure of the seat between first and second positions. The seat belt engaging elements may also be demountable about the rigid internal structure.

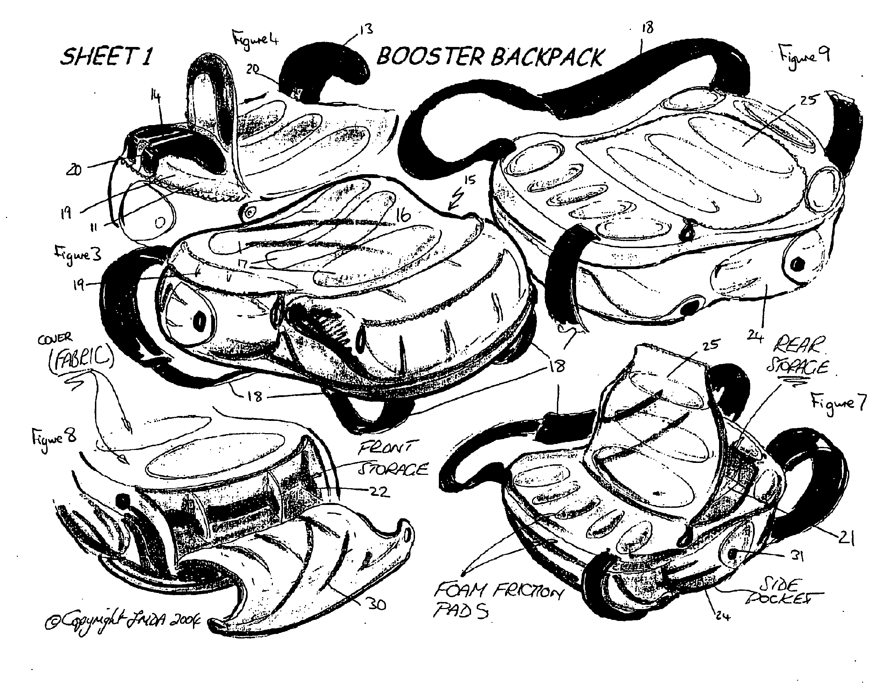

Figures 3 to 8 illustrate a second embodiment of the present invention and define a booster backpack arrangement 15. The top face of the embodiment in Figure 3 illustrates the seat position 16 of the booster backpack 15. The seat portion 16 preferably comprises a composite of fabric and foam padding to provide cushioning for the user, as illustrated by the ribbed sections 17. Straps 18 are provided on the rear of the booster backpack to enable the seat to be carried as a backpack.

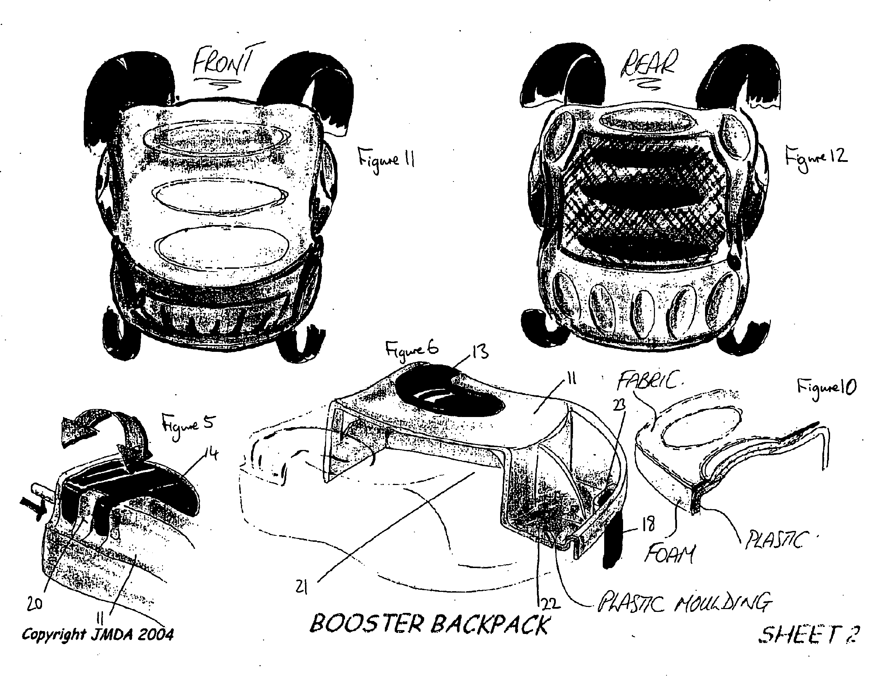

As is more clearly illustrated in Figure 4, seat belt engaging elements 13 and 14 are stowed within a sealable compartment. A hinge arrangement 20 provides connection between the seat belt engaging elements 13 and 14 and the rigid internal structure 11, which is further illustrated in Figure 5.

The internal rigid structure 11 is more clearly defined in Figure 6 in which a sectional perspective view highlights the rear 21 and front 22 storage compartments thus formed by the rigid structure. Anchor points 23 in the rigid internal structure 11 are provided for the attachment of shoulder straps 18.

Figures 7 and 8 further illustrate front storage 22 and rear storage 21 compartments and optional side pockets 24. The storage compartments 21,22 and 24 are accessed by respective flaps 25,30 and 31 in the outer fabric covering 12 of the booster backpack 10. Preferably the flaps are closeable with zip fastenings thereby providing easy securable fastening but other fastening means such as VELCRO™ or press-studs will be equally suitable.

The following statements describe certain preferred features and characteristics of the present invention:

The invention describes a fabric structure encapsulating fully or in parts a reinforcing structure which supports seat belts retaining elements which are movable from a stowed position to a usable position.

The fabric structure has opening elements allowing access to the belt hooks.

A fabric structure with movable elements which enable access to storage compartments within the plastic structure.

A plastic structure combined with a fabric structure such that a functional part of the plastic structure is visible.

A fabric structure which is permanently attached to a fabric structure.

A plastic structure which is removable from the fabric structure.

## Claims

1. A child booster seat comprising a seat arrangement, in which the arrangement comprises a rigid internal structure (11) with a covering, and at least two seat belt engaging elements (13,14), said seat belt engaging elements (13,14) being movable between a stowed position and a deployed, seat belt engaging, position **characterised in that** the internal structure has a fabric covering and **in that** the stowed position of each of the seat belt engaging elements (13,14) is stowed within the seat arrangement (10).

2. A child booster seat as claimed in claim 1, in which the at least two seat belt engaging elements (13,14) are respectively located at left and right sides of the seat arrangement and towards the rear end thereof as defined by the end closest to the back support of a vehicle seat upon which the booster seat is positioned for use.

3. A child booster seat as claimed in claim 1, in which the seat belt engaging elements (13,14) are housed within a fabric-covered compartment of the seat arrangement.

4. A child booster seat as claimed in any one of claims 1 to 3, in which the seat belt engaging elements (13,14) are pivotally attached to the seat arrangement.

5. A child booster seat as claimed in any one of claims 1 to 3, in which the seat belt engaging elements (13,14) are hingedly attached.

6. A child booster seat as claimed in any one of claims 1 to 5, in which the seat belt engaging elements (13,14) are slidably attached within a channel and in which the engaging elements (13,14) are moveable between a first position, in which the elements are stowed within the body of the seat arrangement, and a second position, in which the elements are engageable, in use, with the vehicle's seat belt arrangement.

7. A child booster seat as claimed in any one of claims 1 to 6, in which the seat belt engaging elements (13,14) are demountable.

8. A child booster seat as claimed in any one of claims 1 to 7, in which the seat belt engaging elements (13,14) are rigidly formed.

9. A child booster seat as claimed in any one of the preceding claims, in which the seat belt engaging elements (13,14) comprise arm-rests.

10. A child booster seat as claimed in claim 9, in which the arm-rests are adjustable for height.

11. A child booster seat as claimed in claim 10 or 11, in which the arm-rests are adjustable for length.

12. A child booster seat as claimed in any one of claims 9 to 11, wherein the arm-rests are demountable.

13. A child booster seat as claimed in any one of the preceding claims in which at least one shoulder strap (18) is provided to facilitate carrying and transport of the booster seat arrangement.

14. A child booster seat as claimed in claim 13, in which at least two straps (18) are provided to enable the seat arrangement to be carried on a person's back in the manner of a rucksack or backpack.

15. A child booster seat as claimed in claim 13 or 14, in which the straps (18) are stowable within the seat arrangement.

16. A child booster seat as claimed in any one of claims 13 to 15, in which the straps (18) are demountable.

17. A child booster seat as claimed in any one of the preceding claims, in which the backpack booster seat (10) comprises a rigid internal seat body at least partially covered with a fabric cover.

18. A child booster seat as claimed in any one of the preceding claims, in which the backpack booster seat comprises a rigid internal seat body substantially covered with a fabric cover.

19. A child booster seat as claimed in claim 17 or 18, in which the booster seat further comprises at least one storage compartment formed in the rigid internal seat body.

20. A child booster seat as claimed in any one of the preceding claims, in which the fabric covering (12) is removable from the rigid internal seat body.

21. A child booster seat as claimed in any one of the preceding claims, in which appropriately positioned padding is provided for comfort.

22. A child booster seat as claimed in any one of the preceding claims, in which at least some of the padding is removable.

## Patentansprüche

1. Kindersitzerhöhung mit einer Sitzanordnung, bei der die Anordnung einen starren inneren Aufbau (11) mit einer Abdeckung und wenigstens zwei Sicherheitsgurteingriffselemente (13, 14) umfasst, wobei die Sicherheitsgurteingriffselemente (13, 14) zwischen einer verstauten Position und einer aufgestellten, in den Sicherheitsgurt eingreifenden Position bewegbar sind, **dadurch gekennzeichnet, dass** der innere Aufbau eine Stoffabdeckung aufweist und dass die verstaute Position jedes der Sicherheitsgurteingriffselemente (13, 14) innerhalb der Sitzanordnung verstaut ist.

2. Kindersitzerhöhung nach Anspruch 1, bei der die wenigstens zwei Sicherheitsgurteingriffselemente (13, 14) an der linken bzw. rechten Seite der Sitzanordnung und zu ihrem hinteren Ende hin angeordnet sind, wie es durch das Ende festgelegt ist, das sich am nächsten zu der Rückenstütze eines Fahrzeugsitzes befindet, auf dem die Sitzerhöhung zur Verwendung positioniert ist.

3. Kindersitzerhöhung nach Anspruch 1, bei der die Sicherheitsgurteingriffselemente (13, 14) innerhalb eines mit Stoff bedeckten Fachs der Sitzanordnung untergebracht ist.

4. Kindersitzerhöhung nach einem der Ansprüche 1 bis 3, bei der die Sicherheitsgurteingriffselemente (13, 14) schwenkbar an der Sitzanordnung angebracht sind.

5. Kindersitzerhöhung nach einem der Ansprüche 1 bis 3, bei der die Sicherheitsgurteingriffselemente (13, 14) scharnierartig angebracht sind.

6. Kindersitzerhöhung nach einem der Ansprüche 1 bis 5, bei der die Sicherheitsgurteingriffselemente (13, 14) innerhalb eines Kanals verschiebbar angebracht sind und bei der die Eingriffselemente (13, 14) zwischen einer ersten Position, in der die Elemente innerhalb des Körpers der Sitzanordnung verstaut sind, und einer zweiten Position bewegbar sind, in der die Elemente bei der Verwendung mit der Fahrzeugsicherheitsgurtanordnung in Eingriff bringbar sind.

7. Kindersitzerhöhung nach einem der Ansprüche 1 bis 6, bei der die Sicherheitsgurteingriffselemente (13, 14) abnehmbar sind.

8. Kindersitzerhöhung nach einem der Ansprüche 1 bis 7, bei der die Sicherheitsgurteingriffselemente (13, 14) starr ausgebildet sind.

9. Kindersitzerhöhung nach einem der vorhergehenden Ansprüche, bei der die Sicherheitsgurteingriffselemente (13, 14) Armlehnen umfassen.

10. Kindersitzerhöhung nach Anspruch 9, bei der die Armlehnen höhenverstellbar sind.

11. Kindersitzerhöhung nach Anspruch 10 oder 11, bei der die Armlehnen längenverstellbar sind.

12. Kindersitzerhöhung nach einem der Ansprüche 9 bis 11, wobei die Armlehnen abnehmbar sind.

13. Kindersitzerhöhung nach einem der vorhergehenden Ansprüche, bei der wenigstens ein Schulterriemen (18) vorgesehen ist, um das Tragen und Transportieren der Sitzerhöhungsanordnung zu erleichtern.

14. Kindersitzerhöhung nach Anspruch 13, bei der wenigstens zwei Riemen (18) vorgesehen sind, um zu ermöglichen, dass die Sitzanordnung auf dem Rücken einer Person nach Art eines Rucksacks oder einer Rückentrage getragen wird.

15. Kindersitzerhöhung nach Anspruch 13 oder 14, bei der die Riemen (18) innerhalb der Sitzanordnung verstaubar sind.

16. Kindersitzerhöhung nach einem der Ansprüche 13 bis 15, bei der die Riemen (18) abnehmbar sind.

17. Kindersitzerhöhung nach einem der vorhergehenden Ansprüche, bei der die Rucksacksitzerhöhung (10) einen starren inneren Sitzkörper umfasst, der wenigstens teilweise mit einer Stoffabdeckung bedeckt ist.

18. Kindersitzerhöhung nach einem der vorhergehenden Ansprüche, bei der die Rucksacksitzerhöhung einen starren inneren Sitzkörper umfasst, der im Wesentlichen mit einer Stoffabdeckung bedeckt ist.

19. Kindersitzerhöhung nach Anspruch 17 oder 18, bei der die Sitzerhöhung weiterhin wenigstens ein Lagerfach umfasst, das in dem starren inneren Sitzkörper ausgebildet ist.

20. Kindersitzerhöhung nach einem der vorhergehenden Ansprüche, bei der die Stoffabdeckung (12) von dem starren inneren Sitzkörper entfernbar ist.

21. Kindersitzerhöhung nach einem der vorhergehenden Ansprüche, bei der aus Gründen der Bequemlichkeit eine in geeigneter Weise positionierte Polsterung vorgesehen ist.

22. Kindersitzerhöhung nach einem der vorhergehenden Ansprüche, bei der wenigstens etwas von der Polsterung entfernbar ist.

## Revendications

1. Siège rehausseur pour enfant comprenant un agencement de siège, dans lequel l'agencement comprend une structure interne rigide (11) ayant un revêtement et au moins deux éléments d'engagement de ceinture de sécurité (13, 14), lesdits éléments d'engagement de ceinture de sécurité (13, 14) pouvant être déplacés entre une position rangée et une position déployée d'engagement de ceinture de sécurité déployée, **caractérisé en ce que** la structure interne comporte un revêtement en tissu et **en ce que** la position rangée de chacun des éléments d'engagement de ceinture de sécurité (13, 14) est rangée à l'intérieur de l'agencement de siège (10).

2. Siège rehausseur pour enfant selon la revendication 1, dans lequel les au moins deux éléments d'engagement de ceinture de sécurité (13, 14) sont respectivement situés au niveau des côtés gauche et droit de l'agencement de siège et vers l'extrémité arrière de celui-ci qui est définie par l'extrémité la plus proche du support de dossier d'un siège de véhicule sur lequel le siège rehausseur est positionné pour une utilisation.

3. Siège rehausseur pour enfant selon la revendication 1, dans lequel les éléments d'engagement de ceinture de sécurité (13, 14) sont logés dans un compartiment recouvert par un tissu de l'agencement de siège.

4. Siège rehausseur pour enfant selon l'une quelconque des revendications 1 à 3, dans lequel les éléments d'engagement de ceinture de sécurité (13, 14) sont fixés de façon pivotante à l'agencement de siège.

5. Siège rehausseur pour enfant selon l'une quelconque des revendications 1 à 3, dans lequel les éléments d'engagement de ceinture de sécurité (13, 14) sont fixés de façon articulée.

6. Siège rehausseur pour enfant selon l'une quelconque des revendications 1 à 5, dans lequel les éléments d'engagement de ceinture de sécurité (13, 14) sont fixés avec possibilité de coulissement à l'intérieur d'une rainure et où les éléments d'engagement (13, 14) peuvent être déplacés entre une première position, dans laquelle les éléments sont rangés à l'intérieur du corps de l'agencement de siège, et une deuxième position dans laquelle les éléments peuvent être engagés, en utilisation, avec l'agencement de ceinture de sécurité d'un véhicule.

7. Siège rehausseur pour enfant selon l'une quelconque des revendications 1 à 6, dans lequel les éléments d'engagement de ceinture de sécurité (13, 14) peuvent être démontés.

8. Siège rehausseur pour enfant selon l'une quelconque des revendications 1 à 7, dans lequel les éléments d'engagement de ceinture de sécurité (13, 14) sont formés de manière rigide.

9. Siège rehausseur pour enfant selon l'une quelconque des revendications précédentes, dans lequel les éléments d'engagement de ceinture de sécurité (13, 14) comprennent des accoudoirs.

10. Siège rehausseur pour enfant selon la revendication 9, dans lequel les accoudoirs peuvent être réglés en hauteur.

11. Siège rehausseur pour enfant selon la revendication 10 ou 11, dans lequel les accoudoirs peuvent être réglés en longueur.

12. Siège rehausseur pour enfant selon l'une quelconque des revendications 9 à 11, dans lequel les accoudoirs sont démontables.

13. Siège rehausseur pour enfant selon l'une quelconque des revendications précédentes, dans lequel au moins une sangle pour épaule (18) est prévue pour faciliter le port et le transport de l'agencement de siège rehausseur.

14. Siège rehausseur pour enfant selon la revendication 13, dans lequel au moins deux sangles (18) sont prévues pour permettre à l'agencement de siège d'être transporté sur le dos d'une personne à la manière d'un sac à dos.

15. Siège rehausseur pour enfant selon la revendication 13 ou 14, dans lequel les sangles (18) peuvent être rangées à l'intérieur de l'agencement de siège.

16. Siège rehausseur pour enfant selon l'une quelconque des revendications 13 à 15, dans lequel les sangles (18) sont démontables.

17. Siège rehausseur pour enfant selon l'une quelconque des revendications précédentes, dans lequel le siège rehausseur de type sac à dos (10) comprend un corps de siège interne rigide au moins partiellement recouvert d'un revêtement en tissu.

18. Siège rehausseur pour enfant selon l'une quelconque des revendications précédentes, dans lequel le siège rehausseur de type sac à dos comprend un corps de siège interne rigide globalement recouvert d'un revêtement en tissu.

19. Siège rehausseur pour enfant selon la revendication 17 ou 18, dans lequel le siège rehausseur comprend en outre au moins un compartiment de rangement formé dans le corps de siège interne rigide.

20. Siège rehausseur pour enfant selon l'une quelconque des revendications précédentes, dans lequel le revêtement en tissu (12) peut être retiré du corps de siège interne rigide.

21. Siège rehausseur pour enfant selon l'une quelconque des revendications précédentes, dans lequel un coussin positionné de façon appropriée est prévu pour le confort.

22. Siège rehausseur pour enfant selon l'une quelconque des revendications précédentes, dans lequel au moins une certaine partie du coussin peut être retirée.
